# EUROPEAN PATENT APPLICATION

(11) **EP 3 692 777 A1**
(43) Date of publication of application: **12.08.2020**
(21) Application number: 19156432.7
(22) Date of filing: 11.02.2019
(51) Int. Cl.: A01B 51/02, A01B 69/04, A01C 7/20, A01D 42/00, A01M 7/00

(54) **MACHINE FOR AGRICULTURAL USE**

(30) Priority: 07.02.2019 IT 201900001789
(71) Applicant: Hortobot S.r.l., 11026 Pont-Saint-Martin (Aosta) (IT)
(72) Inventor: POLETTI, Michele, 10012 Bollengo (Torino) (IT); ALFIERI, Vincenzo, 10015 Ivrea (Torino) (IT); MIOLO, Paolo, 10010 Azeglio (Torino) (IT); MINETTO, Roberto, 18013 Diano Marina (Imperia) (IT)
(74) Representative: Rondano, Davide

(57) **Abstract**

The machine (10) comprises: a vehicle (12) having an autonomous guide system for the movement of the vehicle along a driving direction (x); a plurality of working modules (14) each arranged to carry out one or more operations for the cultivation of agricultural lands, vegetable gardens and/or greenhouses; and a programmable electronic control unit (48) for controlling the machine (10). The vehicle (12) comprises: a supporting frame (16); a propulsion system (18) for driving the movement of the vehicle (12) along the driving direction (x); a carriage (20) that is mounted on the supporting frame (16) so as to be slidable along a transverse direction (y) and carries the working modules (14); a first driving system (22) for driving the movement of the carriage (20) along the transverse direction (y); and a plurality of second driving systems (24) for driving each the movement of a respective working module (14) relative to the carriage (20) in a vertical direction (z).

## Description

The present invention relates to a machine for agricultural use comprising an autonomous-drive vehicle and a plurality of working modules carried by the vehicle to carry out a number of operations, in particular operations intended for processing cultivated lands (including orchards), vegetable gardens and/or greenhouses.

Such a machine is known for example from US 2017/0227969 A1. According to this known solution, the autonomous-drive vehicle comprises a supporting frame to which one or more agricultural tools are connectable. The supporting frame is transversely adjustable so that its width may be varied, depending for example on the width of the land to be cultivated. In addition, the supporting frame is vertically movable to allow the vertical position of the tools carried thereon to be varied.

It is an object of the present invention to provide a machine for agricultural use of the type specified above, which allows to carry out more precise and accurate working operations than the prior art discussed above.

This and other objects are fully achieved according to the present invention by virtue of a machine as defined in the attached independent claim 1.

Advantageous embodiments of the invention are specified in the dependent claims, the content of which is to be considered as forming an integral part of the following description.

In short, the invention is based on the idea of providing a machine wherein each working module carried by the vehicle is movable both in a transverse direction, that is along a horizontal direction perpendicular to the fore-aft direction (or driving direction) of the vehicle, and in a vertical direction.

By virtue of such a configuration it is possible to precisely and accurately work the agricultural land, optimising the land usage and therefore maximising the yield of the land.

The features and advantages of the present invention will clearly appear from the following detailed description, given by way of purely non-limiting example with reference to the appended drawings, wherein:
Figure 1 is an axonometric view of a machine for agricultural use according to an embodiment of the present invention;

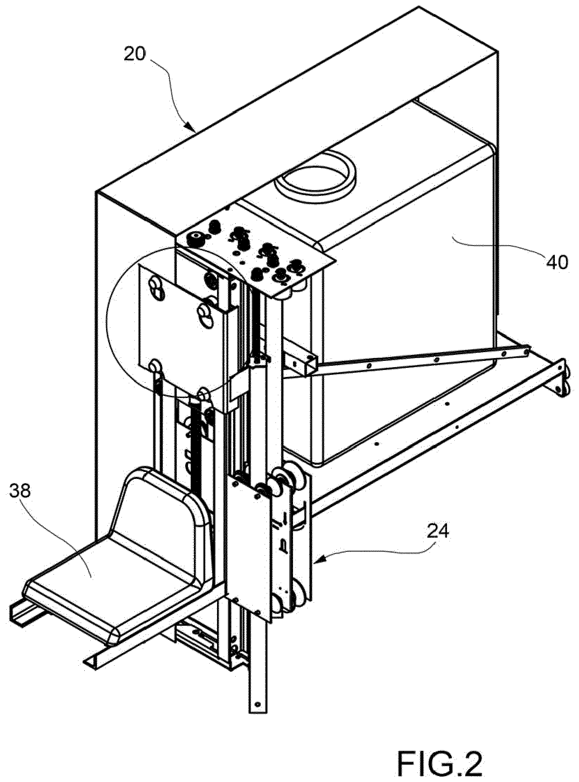

Figure 2 is an axonometric view showing in detail a carriage of the machine of Figure 1; and
Figures 3a and 3b are block diagrams of two examples of cultivation systems using a machine according to the invention.

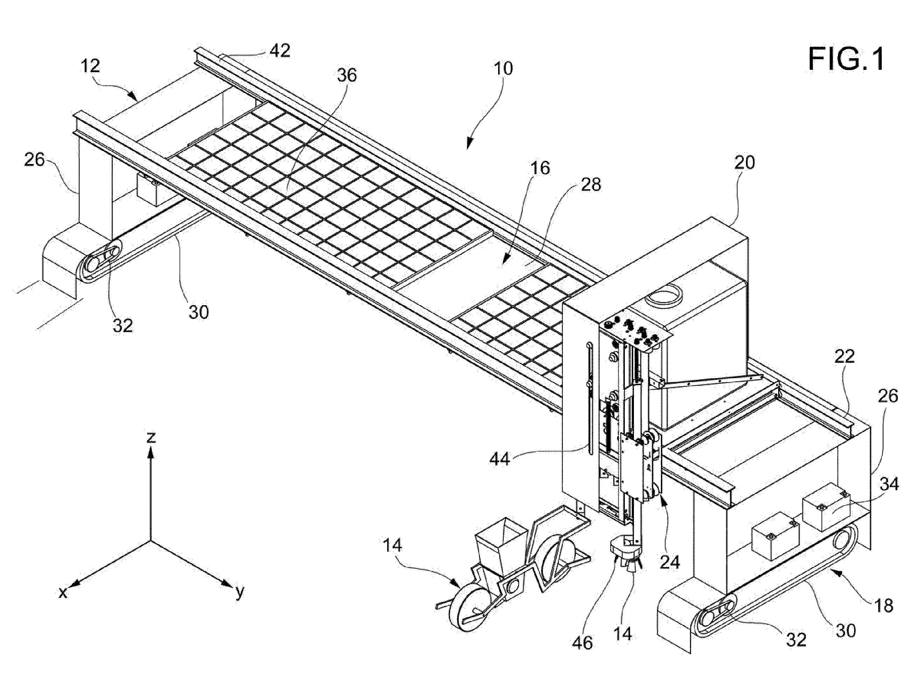

With reference first to Figure 1, a machine for agricultural use according to an embodiment of the present invention is generally indicated with 10.

The machine 10 basically comprises an autonomous-drive vehicle 12 and a plurality of working modules 14 carried by the vehicle 12.

The term "working module" is intended herein to designate, in a non-limiting way, a component which is able to carry out an operation or a control activity for the purpose of working a cultivated land, a vegetable garden, a greenhouse, etc.

The vehicle 12 is a self-moving structure arranged to move along a fore-aft direction (or driving direction) x. Generally, an agricultural land extends along a main direction and the plants are distributed in rows or grooves substantially parallel to said main direction. In this case, the vehicle will move along said main direction in the agricultural land, that is the driving direction x will correspond to the main direction of the agricultural land. The machine according to the invention is preferably intended for use on lands or areas of rectangular shape, but may nevertheless be used on lands or areas of any other shapes, for example of substantially circular or curved shape, wherein the plants are distributed along rows or grooves that are parallel to each other but do not extend along a straight direction.

The vehicle 12 comprises a supporting frame 16, a propulsion system 18, a carriage 20 carried by the supporting frame 16, a first driving system 22 for driving the movement of the carriage 20 relative to the supporting frame 16 and a plurality of second driving systems 24 for driving each the movement of a respective working module 14 relative to the carriage 20.

The supporting frame 16 is made to rest on the land to be cultivated at its transversely opposite ends. For example, according to the embodiment described herein, the supporting frame 16 comprises a pair of side uprights 26 and a cross-member 28 connecting the side uprights 26 one to the other. The side uprights 26 extend in a vertical direction z, supporting the cross-member 28 at a given height from the ground. The cross-member 28 extends along the transverse direction y, that is a horizontal direction perpendicular to the fore-aft direction x.

The vehicle 12 may be made in different sizes (that is, with different widths, or transverse sizes, of the cross-member 28), each intended for working a land or an area having a given width. For example, the cross-member 28 may have a width of about 8 meters and thus cover a land or area of the same width. The cross-member 28 may have a particularly large width, for example 16 meters or 24 meters, in which case the supporting frame 16 may comprise one or more intermediate uprights interposed between the two side uprights 26 to provide intermediate support for the cross-member 28 on the land or area to be worked.

The propulsion system 18 preferably comprises a pair of tracks 30 (or, alternatively, one or more pairs of driving wheels) each carried by one of the side uprights 26 of the supporting frame 16, and one or more electric drive motors 32 for driving the tracks 30 (or the driving wheels), if necessary with a speed reducer gear in between. It is possible to use a single electric drive motor 32 to drive both the tracks 30, or both the driving wheels, by means of a suitable torque transmission system. When one or more intermediate uprights are present, they will also be provided with tracks or wheels, which may be either motorized or not.

Alternatively, the propulsion system may comprise a metal wire rope secured to an end of the land or area to be cultivated and a winch placed on board of the vehicle and driven into rotation by an electric geared motor to wind the metal wire rope on it. In this case it is preferable to provide a pair of metal wire ropes secured to the opposite ends of the land, so that the vehicle may be moved along the fore-aft direction x in the two opposite directions.

A control system may be associated to the propulsion system 18, which control system uses for example the signal of a sensor arranged to measure at least one of the following parameters: position of the vehicle along the direction x, travel speed of the vehicle along the direction x, angular speed of the tracks 30 (or of the wheels), and/or other parameters representative of the position of the vehicle along the direction x or of the travel speed of the vehicle along said direction.

The electric drive motor 32 (or each electric drive motor, in case of more than one motor) may be powered by one or more rechargeable batteries 34, for example lead batteries. Several components may be associated to the rechargeable battery 34, such as for example a control module for managing the recharge of the battery and for detecting the state of charge of the battery, a circuit for detection and limitation of the maximum current absorbed in use by the rechargeable battery, a module for generating intermediate voltages and/or a DC/AC inverter module for generating an alternating voltage, for example for generating an alternating voltage equal to the grid voltage.

The rechargeable battery 34 may be powered by means of a photovoltaic panel 36, which may be placed on board of the vehicle 12, for example on the supporting frame 16, or alternatively on the ground, close to the land to be cultivated.

Alternatively, the rechargeable battery 34 may be recharged by connection to the grid, using an electric connector placed on the ground in a position that is easily accessible by the vehicle 12, for example at an end of the agricultural land.

The carriage 20 is carried by the supporting frame 16, and more specifically by the cross-member 28, so as to be slidable in the transverse direction y.

The carriage 20 carries several working modules 14, which may be detachably connected to the carriage, for example by means of electromagnetically-operated coupling means, and are slidable relative to the carriage in the vertical direction (which direction is indicated with z in Figure 1).

Advantageously, the carriage 20 may further receive a tank 40, arranged to contain water or liquid preparations for agricultural use (such as, by way of non-limiting example, herbicidal preparations, fungicidal preparations, pesticides, insecticides or biocides, phytosanitary or phytopharmaceutical preparations, fertilizers or chemical or biological compounds acting directly on the terrain, on the plant or both) and a system of solenoid valves arranged to put the inside of the tank 40 in fluid communication each time with one working module 14, for example with an irrigation module.

The movement of the carriage 20 along the transverse direction y relative to the cross-member 28 of the supporting frame 16 is driven by the first driving system 22.

The first driving system 22 may comprise a first linear guide device 42 mounted on the supporting frame 16, in particular on the cross-member 28, to guide the movement of the carriage 20 along the transverse direction y, and a first control device (not shown, though known per se) arranged to control the movement of the carriage 20 along the first linear guide device 42. For example, the first control device may comprise a worm gear mechanism driven by an electric motor.

The first driving system 22 may further comprise a first pair of end-stop elements (not shown, though known per se), placed at the opposite ends of the cross-member 28 to limit the movement of the carriage 20 along the transverse direction y between a left end position and a right end position. For example, the end-stop elements may be inductive sensors each arranged to sense the respective distance from the carriage 20.

It is also possible, in particular when the cross-member 28 of the supporting frame 16 is particularly long, to provide more than one carriage 20 on board of the vehicle 12. In this case, each carriage 20 will advantageously be moved independently of the other one(s) by means of a respective first driving system 22.

The movement of each working module 14 along the vertical direction z relative to the carriage 20 is driven by the respective second driving system 24.

Each second driving system 24 may comprise a second linear guide device 44 mounted on the carriage 20 to guide the movement of the respective working module 14 along the vertical direction z, and a second control device (not shown, but of per-se-known type) arranged to control the movement of the respective working module 14 along said second linear guide device 44. For example, the second control device may comprise a worm screw mechanism and an electric motor arranged to drive the worm screw mechanism.

Each second driving system 24 may further comprise a second pair of end-stop elements (not shown, though known per se), placed at vertically opposite ends of the carriage 20, to limit the movement of the respective working module 14 along the vertical direction z between a bottom end position (for example, a position in which the working module 14 is in contact with the ground) and a top end position. Said end-stop elements may be inductive sensors each arranged to sense the distance from the respective working module 14.

Non-limiting examples of working modules 14 that may be mounted on the carriage 20 are: a manuring module arranged for example to contain, preserve, dispense and/or distribute manuring material on the terrain; a milling module for milling the terrain; a weeding module arranged, for example, to dispense and/or distribute a herbicidal preparation; a hoeing module for hoeing the terrain; an irrigation module arranged, for example, to dispense, spray, distribute and/or temporise dispensing of irrigation water; a sowing module arranged, for example, to contain seeds and/or sprouts and/or plant them in the terrain; a transplanting module for transplanting plants in the terrain; a ventilation module; a mowing module; a harvesting module for harvesting, for example, grains, fruits, vegetables, flowers, biomasses, or farming products in general; a harrowing module; a ploughing module, etc..

At least one of the working modules 14 may further comprise a platform 38 arranged to accommodate an operator.

Furthermore, the machine 10 may also comprise one or more sensors 46 to sense, for example, at least one of the following parameters: humidity of the terrain and/or of the air, illuminance, temperature of the air and/or of the terrain, ultraviolet and/or infrared radiance, and/or wind speed. In particular, at least one sensor 46 arranged to sense at least one of the humidity and/or temperature of the terrain may be mounted on a working module 14, if necessary in combination with the functions of the working module 14 listed above, so that it may be put in contact with the ground by virtue of the movement of the respective working module 14 along the vertical direction z.

A respective identification code may also be associated to one or more of the working modules 14 for the electronic identification of the same. For example, it is possible to provide one or more of the working modules 14 with an RFID tag, a bar code or a QR code, and provide the carriage 20 with an RFID reader, a bar code reader or a QR code reader, respectively.

One or more of the working modules 14 may further comprise an electric motor (not shown, though known per se) to drive moving parts of the working module 14, if any, and electric connection means for powering the electric motor and/or data transmission means for transmitting data from the working module 14 to the vehicle 12 and vice versa.

It is also possible to install at least one working module 14 permanently on the carriage 20 and mount the other working modules 14 detachably on the same carriage, in order to allow easy replacement of said modules depending on specific requirements. Preferably, modules like the ventilation module, the hoeing module, the weeding module, the sowing module, the milling module and the sensor module for sensing soil parameters are permanently installed on the carriage 20.

The machine 10 according to the invention further comprises a programmable electronic control unit 48 for controlling the machine, for example according to a work cycle selectable by an operator, in particular for controlling the movement of the carriage 20 along the transverse direction y and the movement of each working module 14 along the vertical direction z, as well as for driving the electric motor (or other control device), if any, on board of each working module 14. The electronic control unit 48 may be arranged to carry out a completely automatic control of the machine 10 or, alternatively, to carry out a semi-automatic control - for example with the supervision of a human operator - of the machine 10.

The term "work cycle" is intended to refer, in a non-limiting way, to a sequence, either programmed or programmable, of operations, movements and functions that the machine 10 and its components may carry out in a completely automatic way, in a semi-automatic way or under control of a human operator for working or cultivating a terrain, a vegetable garden or a greenhouse.

The vehicle 12 is provided with an autonomous guide system for guiding the vehicle 12 along the driving direction x. The autonomous guide system may provide different levels of autonomy, in that it may allow a completely autonomous drive or a semi-autonomous drive, for example under the supervision of a human operator, of the vehicle 12.

The autonomous guide system and the electronic control unit 48 may cooperate one with the other to simultaneously manage driving of the vehicle 12 and control of the machine 10 and of its components. For example, it is possible to drive the movement of the carriage 20 along the transverse direction y simultaneously with the movement of the vehicle 12 along the driving direction x, as well as control the operation of a working module 14 (for example, controlling the dispensing of a herbicidal preparation from a weeding module) and, simultaneously, the movement of the vehicle 12 along the driving direction x or, also, activate a working module 14 depending on whether a certain speed of the vehicle 12 along the driving direction x has been reached.

In order to guide the vehicle 12 along the driving direction x and, therefore, define its position in the work area on the ground, the autonomous guide system may comprise a vision system, for example a set of optical cameras, installed on board of the vehicle 12, for example on the supporting frame 16, to locate at least one reference element on the ground. A reference element on the ground may be, for example, a linear reference element placed on the ground close to the vehicle 12, raised from the ground by means of stakes, and defining a direction substantially parallel to the driving direction x, or may be formed by a plurality of optical reference elements placed at the border of the agricultural land. Based on the observation of said reference element(s), the electronic control unit 48 is able to determine the orientation of the vehicle 12 relative to the reference element and, if necessary, carry out the required actions to bring the driving direction x within a tolerance band or to cause the driving direction x to substantially coincide with the required driving path.

The autonomous guide system may further comprise one or more position sensors, mounted on the vehicle 12, for example on the supporting frame 16 or on a working module 14, for sensing for example a metallic strip placed on the ground and transmitting a signal representative of the relative position of said metallic strip to the electronic control unit 48, in order to determine the relative position of the vehicle 12 with respect to said metallic strip.

The autonomous guide system may further comprises a receiver, mounted on board of the vehicle, for example on the supporting frame 16, for determining a position of the vehicle 12 on the ground by means of a satellite navigation system, and communicating this position to the electronic control unit 48.

The autonomous guide system may comprise, in combination with each other, more than one of the systems described above, both to ensure redundancy and to obtain a more precise and safer guide of the vehicle 12.

A remote control device 50, for example a portable remote control device, may be further associated to the machine 10 for controlling the machine 10.

The remote control device 50 may be a smartphone, a laptop, a tablet, a computer desktop or similar electronic device, and is arranged to transmit and receive data to and from the electronic control unit 48 of the machine 10, respectively, in particular for controlling the machine 10 and defining a work cycle of the machine 10.

The exchange of data between the remote control device 50 and the machine 10 may be carried out by means of a direct connection, a Wi-Fi connection, a radio-frequency transmission, or any other known method for data transmission. The remote control device 50 may be, for example, configured to allow an operator to control the state of one or more machines 10, to send commands to the machine 10 or a component thereof, in particular to the autonomous guide system or one of the working modules 14, to visualize data relating to a work cycle, in particular to visualize data sensed by a sensor of the machine 10 or a sensor of a working module 14, or to start the acquisition of data by means of one or more of said sensors.

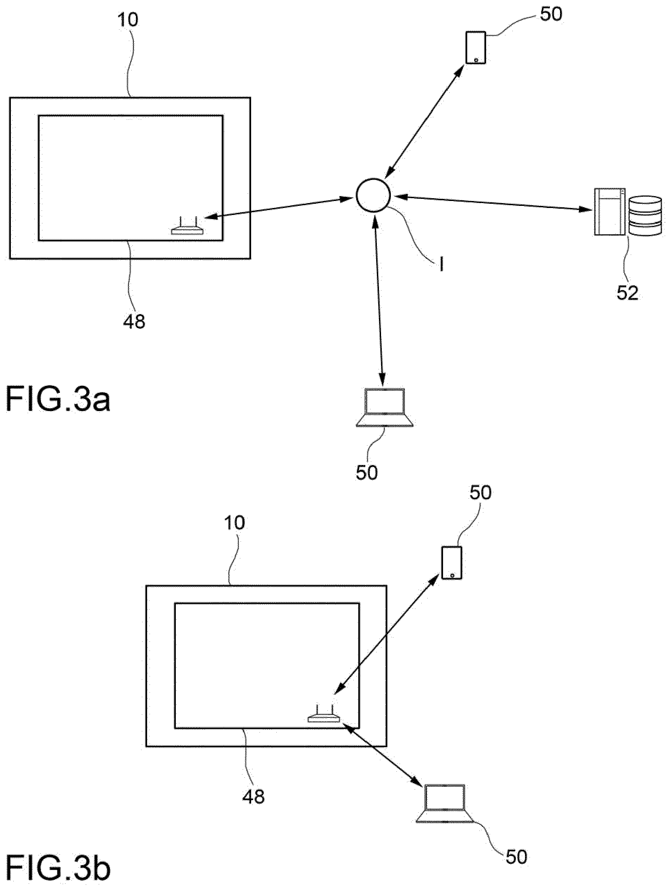

In particular, it is possible to operate the machine 10 according to two different operating modes, shown in Figures 3a and 3b, respectively. In the first mode, which is used when a network connection signal is on, the connection, and thus the data exchange, between the remote control device 50 and the electronic control unit 48 on board of the machine 10 is obtained by means of a protected and remote connection to a company server 52, connected to internet I. In the second mode, which is used, instead, when the network connection signal is off, the connection, and thus the data exchange, between the remote control device 50 and the electronic control unit 48 on board of the machine 10 is obtained by direct link, that is by means of a Wi-Fi connection between the remote control device 50 and the electronic control unit 48. In this case, a physical proximity is required between the machine 10 and the remote control device 50. In this mode, the machine 10 collects locally, at the electronic control unit 48, all the data relating to the operations and as soon as it is possible to connect with the company server 52, for example as soon as the network coverage is reactivated, the data are synchronized on the company server 52.

In each of the two modes described above, the machine 10 may further inform an operator, by means of the remote control device 50, about a certain event, such as the beginning or the completion of a work cycle, the presence of an obstacle, the occurrence of a problem, the detection of parameters, or the occurrence of conditions of malfunctioning of the machine 10 that require the intervention of the operator.

It is also possible that the electronic control unit 48 controls the machine 10 in a completely autonomous manner, via an Internet connection. For example, the electronic control unit 48 may be arranged to define and carry out cultivation cycles autonomously, based on information found on the Internet or provided by a human operator, in particular information relating to current and future weather conditions, and thus to establish when and how to carry out irrigating, harvesting or sowing operations, etc. Furthermore, the electronic control unit 48 may also be arranged to determine the type of cultivation to carry out based on information found on, or obtained from, the Internet or provided by a human operator, in particular information relating to the conditions of the agricultural market, and thus to establish when and what to sow or seed.

Two possible work cycles of the machine described above will now be illustrated, purely by way of non-limiting example.

In a first example, first the machine 10 is stationary at and end of the agricultural land to be cultivated and two working modules 14 are mounted on the carriage 20, namely an irrigation module and a sensor module for measuring the humidity of the terrain. The operator starts, by means of the remote control device 50, an irrigation operation in those regions of the agricultural land where the humidity level is lesser than a certain predetermined value. This command may be given, for example, by means of a predefined program. The vehicle 12 starts moving along the driving direction x, under the control of the autonomous guide system, and at the same time the carriage 20 moves along the transverse direction y so that the sensor module senses, point by point, the humidity of the terrain. When the sensed humidity is lesser than the predetermined value, the electronic control unit 48 controls the opening of the solenoid-valves of the tank 40 and the irrigation module receives the required water. At this point, the irrigation operation is also started, for example with a timing that depends on a predetermined time interval or on the measurement of the humidity of the terrain provided by the sensor module. When the machine 10 reaches the opposite end of the agricultural land, the irrigation operation is completed. At this point, the work cycle may for example be programmed to bring the machine 10 back into the starting position and connect it to a solar panel for recharging the rechargeable battery 34.

In a second example of operation, first the machine 10 is stationary at an end of a tomato field and two working modules 14 are mounted on the carriage 20, namely a harvesting module having a robot arm and a sensor module arranged to determine whether ripe fruits are present or not, for example by acquiring an image and sending it to the electronic control unit 48 for processing by means of a software arranged to determine whether ripe fruits are present or not in a digital image, or by means of a colour measurement sensor. The operator starts, by means of the remote control device 50, a harvesting operation for harvesting the ripe fruits in the field, for example the fruits having a size greater than a given minimum size and/or having a colour (indicative of the degree of ripeness of the fruit) similar to a target colour. The vehicle 12 starts moving along the driving direction x, under the control of the autonomous guide system, and at the same time the sensor module, moving along the cross-member 28 in the transverse direction y to locate each plant and along the carriage 20 in vertical direction z to analyse entirely each plant, determines whether ripe fruits are present or not on each plant. When the presence of ripe fruits is established, the electronic control unit 48 causes the vehicle 12 to stop and the harvesting operation to start. When the harvesting operation is completed, movement of the vehicle 12 along the driving direction x is resumed until further ripe fruits are detected. These operations are repeated until the machine 10 reaches the opposite end of the field and thus the harvesting operation is completed. At this point, the work cycle may for example be programmed to bring the machine 10 back into the starting position and connect it to a solar panel for recharging the rechargeable battery 34.

In general, the invention is applicable to any agricultural area, both indoor and outdoor, in particular in a greenhouse, and is applicable for example to row crop cultivation or to the cultivation of trees or fruits and, more generally, to any kind of cultivation. Non-limiting examples of application of the present invention are the cultivation of cereals, legumes and row vegetables in soil or in topsoil, the cultivation of fruit and/or fruit trees, the floriculture, the cultivation of plants for collecting biomass, the arboriculture, the viticulture, the rice growing etc..

As it is clear from the preceding description, the use of a machine according to the present invention provides several advantages.

First of all, the detachable connection of at least some of the working modules with the carriage allows to change the configuration of the machine depending on the specific needs of the moment, in particular on the type of terrain to work.

Furthermore, by virtue of the joint action of the autonomous guide system and of the propulsion system, of the first driving system and of the plurality of second driving systems, it is possible to position a working module in a precise point of the terrain and at a precise height from the ground, i.e. it is possible to accurately position a working module along the three directions. This allows not only to use the same vehicle to transport working modules, and hence tools or sensors, that have to operate at different heights from the ground, but also to carry out different operations in different regions of the work area. For example, it is possible to irrigate only a precise portion of the terrain or distribute a herbicidal preparation only where it is actually needed. In this way, it is possible to cultivate different types of plants/vegetables on a same terrain, thereby overcoming the main disadvantages of the monoculture, such as the easy spread of fungi, insects or pests.

Additionally, by virtue of the configuration of the supporting frame of the vehicle it is possible to reduce the area of the terrain that is subject to compression, i.e. the area of the terrain on which the tracks or the wheels of the vehicle rest, which results in an increased softness of the terrain. In particular, thanks to the possibility of defining in advance the width (i.e. the transverse size) of the supporting frame, and thus the distance between the points where the vehicle rests on the ground, which distance may reach very large values (for example 8, 12, 16 meters or more), and thanks to the fact that the carriage is transversally movable along the cross-member, it is possible for the operator to define the spacing between the rows depending solely on the requirements of the cultivation and the peculiar features of the plant to be cultivated, and not on the dimensional and structural features of the machine, contrary to the conventional farming by means of tractors.

Finally, the machine may be remotely controlled, even in a completely automated manner, thereby making the work of the farmer remarkably easier.

Naturally, the principle of the invention remaining unchanged, the embodiments and the constructional details may vary widely from those described and illustrated purely by way of non-limiting example, without thereby departing from the scope of the invention as defined in the appended claims.

## Claims

1. Machine (10) for agricultural use comprising
a vehicle (12) provided with an autonomous guide system for controlling the movement of the vehicle (12) along a driving direction (x),
a plurality of working modules (14) each arranged to carry out one or more operations for the cultivation or tillage of agricultural lands, vegetable gardens and/or greenhouses, and
a programmable electronic control unit (48) for controlling the machine (10), wherein the vehicle (12) comprises
a supporting frame (16),
a propulsion system (18) for driving the vehicle (12) along the driving direction (x),
a carriage (20) that is slidably mounted on the supporting frame (16) for sliding along a transverse direction (y) substantially perpendicular to the driving direction (x), and is arranged to carry said plurality of working modules (14),
a first driving system (22) for driving movement of the carriage (20) relative to the supporting frame (16) along said transverse direction (y), and
a plurality of second driving systems (24) for driving each the movement of a respective working module (14) relative to the carriage (20) in a vertical direction (z).

2. Machine according to claim 1, wherein the supporting frame (16) comprises a pair of side uprights (26) and a cross-member (28) which extends along said transverse direction (y) connecting the side uprights (26) to each other and on which the carriage (20) is slidably mounted along said transverse direction (y).

3. Machine according to claim 1 or claim 2, wherein the propulsion system (18) comprises a pair of tracks (30), or a pair of driving wheels, arranged on two transversely opposite sides of the supporting frame (16), and at least one electric drive motor (32) for driving said pair of tracks (30) or driving wheels.

4. Machine according to claim 3, further comprising at least one rechargeable battery (34) for powering said at least one electric drive motor (32).

5. Machine according to any one of the preceding claims, wherein at least one of said working modules (14) comprises an electric motor and electric connection means for powering said electric motor and/or data transmission means for transmitting data from the working module (14) to the electronic control unit (48) and vice versa.

6. Machine according to any one of the preceding claims, wherein one of said working modules (16) comprises a platform (38) arranged to accommodate an operator.

7. Machine according to any one of the preceding claims, wherein at least one of said working modules (14) is provided with an identification code and wherein the carriage (20) comprises a reader for reading the identification code of said working module (14) and transmitting to the electronic control unit (48) an information regarding the identification code that has been read.

8. Machine according to any one of the preceding claims, wherein said plurality of working modules (14) comprises one or more of the following modules: a manuring module, a milling module, a weeding module, a hoeing module, an irrigation module, a sowing module, a transplanting module, a ventilation module, and/or a mowing module.

9. Machine according to any one of the preceding claims, wherein the carriage (20) further comprises a tank (40) for containing water or liquid preparations for agricultural use and a set of solenoid valves for putting the tank (40) in fluid communication each time with a given working module (14).

10. Machine according to any one of the preceding claims, further comprising at least one sensor (46) for sensing at least one parameter, such as the humidity of the air, the humidity of the terrain, the illuminance, the temperature of the air, the temperature of the terrain, the ultraviolet and/or infrared radiance, and/or the wind speed, and for transmitting to the electronic control unit (48) an information relating to the parameter that has been sensed.

11. Machine according to claim 10, comprising a sensor (46) for sensing the humidity of the terrain and/or a sensor (46) for sensing the temperature of the terrain, said sensor(s) (46) being mounted on an working module (14) so as to be movable in the vertical direction (z) together with said working module (14) to be brought in contact with the ground.

12. Machine according to any one of the preceding claims, wherein the autonomous guide system of the vehicle (12) comprises:
a vision system installed on board of the vehicle (12), said vision system being configured to locate a linear reference element and/or a plurality of optical reference elements placed on the terrain and to determine a relative orientation of the vehicle (12) with respect to the linear reference element and/or to at least one of said optical reference elements; and/or
a position sensor installed on board of the vehicle (12), said position sensor being arranged to sense a metallic strip placed on the terrain and to determine the relative position of the vehicle (12) with respect to the metallic strip; and/or
a receiver configured to determine the position of the vehicle (12) on the terrain by means of a satellite navigation system.

13. Cultivation system comprising a machine (10) according to any one of the preceding claims and a remote control device (50) for receiving information from the electronic control unit (48) of the machine (10) and transmitting commands to the electronic control unit (48) of the machine (10), in particular for the definition of a work cycle of the machine (10).

## Amended claims

### Amended claims in accordance with Rule 137(2) EPC.

1. Machine (10) for agricultural use comprising
a vehicle (12) provided with an autonomous guide system for controlling the movement of the vehicle (12) along a driving direction (x),
a plurality of working modules (14) each arranged to carry out one or more operations for the cultivation or tillage of agricultural lands, vegetable gardens and/or greenhouses, and
a programmable electronic control unit (48) for controlling the machine (10), wherein the vehicle (12) comprises
a supporting frame (16),
a propulsion system (18) for driving the vehicle (12) along the driving direction (x), a carriage (20) that is slidably mounted on the supporting frame (16) for sliding along a transverse direction (y) substantially perpendicular to the driving direction (x), and is arranged to carry said plurality of working modules (14), wherein at least one of said working modules (14) is detachably connected to the carriage (20), so as to allow replacement of said at least one working module (14) with a different one,
a first driving system (22) for driving movement of the carriage (20) relative to the supporting frame (16) along said transverse direction (y), and
a plurality of second driving systems (24) for driving each the movement of a respective working module (14) relative to the carriage (20) in a vertical direction (z).

2. Machine according to claim 1, wherein the supporting frame (16) comprises a pair of side uprights (26) and a cross-member (28) which extends along said transverse direction (y) connecting the side uprights (26) to each other and on which the carriage (20) is slidably mounted along said transverse direction (y).

3. Machine according to claim 1 or claim 2, wherein the propulsion system (18) comprises a pair of tracks (30), or a pair of driving wheels, arranged on two transversely opposite sides of the supporting frame (16), and at least one electric drive motor (32) for driving said pair of tracks (30) or driving wheels.

4. Machine according to claim 3, further comprising at least one rechargeable battery (34) for powering said at least one electric drive motor (32).

5. Machine according to any one of the preceding claims, wherein at least one of said working modules (14) comprises an electric motor and electric connection means for powering said electric motor and/or data transmission means for transmitting data from the working module (14) to the electronic control unit (48) and vice versa.

6. Machine according to any one of the preceding claims, wherein one of said working modules (16) comprises a platform (38) arranged to accommodate an operator.

7. Machine according to any one of the preceding claims, wherein at least one of said working modules (14) is provided with an identification code and wherein the carriage (20) comprises a reader for reading the identification code of said working module (14) and transmitting to the electronic control unit (48) an information regarding the identification code that has been read.

8. Machine according to any one of the preceding claims, wherein said plurality of working modules (14) comprises one or more of the following modules: a manuring module, a milling module, a weeding module, a hoeing module, an irrigation module, a sowing module, a transplanting module, a ventilation module, and/or a mowing module.

9. Machine according to any one of the preceding claims, wherein the carriage (20) further comprises a tank (40) for containing water or liquid preparations for agricultural use and a set of solenoid valves for putting the tank (40) in fluid communication each time with a given working module (14).

10. Machine according to any one of the preceding claims, further comprising at least one sensor (46) for sensing at least one parameter, such as the humidity of the air, the humidity of the terrain, the illuminance, the temperature of the air, the temperature of the terrain, the ultraviolet and/or infrared radiance, and/or the wind speed, and for transmitting to the electronic control unit (48) an information relating to the parameter that has been sensed.

11. Machine according to claim 10, comprising a sensor (46) for sensing the humidity of the terrain and/or a sensor (46) for sensing the temperature of the terrain, said sensor(s) (46) being mounted on an working module (14) so as to be movable in the vertical direction (z) together with said working module (14) to be brought in contact with the ground.

12. Machine according to any one of the preceding claims, wherein the autonomous guide system of the vehicle (12) comprises:
a vision system installed on board of the vehicle (12), said vision system being configured to locate a linear reference element and/or a plurality of optical reference elements placed on the terrain and to determine a relative orientation of the vehicle (12) with respect to the linear reference element and/or to at least one of said optical reference elements; and/or
a position sensor installed on board of the vehicle (12), said position sensor being arranged to sense a metallic strip placed on the terrain and to determine the relative position of the vehicle (12) with respect to the metallic strip; and/or
a receiver configured to determine the position of the vehicle (12) on the terrain by means of a satellite navigation system.

13. Cultivation system comprising a machine (10) according to any one of the preceding claims and a remote control device (50) for receiving information from the electronic control unit (48) of the machine (10) and transmitting commands to the electronic control unit (48) of the machine (10), in particular for the definition of a work cycle of the machine (10).
